# EUROPÄISCHE PATENTSCHRIFT

(11) **EP 3 610 289 B1**
(45) Veröffentlichungstag und Bekanntmachung des Hinweises auf die Patenterteilung: **01.06.2022**
(21) Anmeldenummer: 18715675.7
(22) Anmeldetag: 04.04.2018
(51) Int. Cl.: G01S 15/00, G01S 15/02, G01S 7/527, G10K 11/34, G01S 7/526, G01S 7/534, G01S 7/536, G01S 15/42, G01S 15/89, G01S 5/22, G01S 7/52

(54) **VERARBEITUNGSEINHEIT FÜR EINE SONARANLAGE ZUM VERARBEITEN VON HYDROPHONSIGNALEN SOWIE SONARANLAGE UND VERFAHREN**
PROCESSING UNIT FOR A SONAR SYSTEM FOR PROCESSING HYDROPHONE SIGNALS AND SONAR SYSTEM AND METHOD
UNITÉ DE TRAITEMENT POUR UN SYSTÈME SONAR SERVANT À TRAITER DES SIGNAUX D'HYDROPHONE AINSI QUE SYSTÈME SONAR ET PROCÉDÉ

(30) Priorität: 10.04.2017 DE 102017107634
(43) Veröffentlichungstag der Anmeldung: 19.02.2020
(73) Patentinhaber: ATLAS ELEKTRONIK GmbH, 28309 Bremen (DE)
(72) Erfinder: SCHAD, Adrian, 28207 Bremen (DE); KNABE, Sebastian, 28832 Achim (DE)
(74) Vertreter: thyssenkrupp Intellectual Property GmbH
(86) Internationale Anmeldenummer: PCT/EP2018/058521
(87) Internationale Veröffentlichungsnummer: WO 2018/188994

(56) Entgegenhaltungen:
- US-A- 4 112 430
- US-A- 5 581 620
- US-A1- 2007 008 818
- GEORGE A D ET AL: "Real-time sonar beamforming on high-performance distributed computers", PARALLEL COMPU, ELSEVIER, AMSTERDAM, NL, Bd. 26, Nr. 10, 15. August 2000 (2000-08-15), Seiten 1231-1252, XP004213518, ISSN: 0167-8191, DOI: 10.1016/S0167-8191(00)00037-5
- CHI CHENG ET AL: "Fast Broadband Beamforming Using Nonuniform Fast Fourier Transform for Underwater Real-Time 3-D Acoustical Imaging", IEEE JOURNAL OF OCEANIC ENGINEERING, IEEE SERVICE CENTER, PISCATAWAY, NJ, US, Bd. 41, Nr. 2, 1. April 2016 (2016-04-01), Seiten 249-261, XP011606051, ISSN: 0364-9059, DOI: 10.1109/JOE.2015.2429251 [gefunden am 2016-04-12]
- GRIFFITHS H D ET AL: "Processing techniques for circular sonar arrays", ELECTRONIC ENGINEERING IN OCEANOGRAPHY, 1994., SIXTH INTERNATIONAL CON FERENCE ON CAMBRIDGE, LONDON, UK,IEE, UK, 1. Januar 1994 (1994-01-01), Seiten 67-72, XP006512750, DOI: 10.1049/CP:19940577 ISBN: 978-0-85296-619-8

## Beschreibung

Die Erfindung betrifft den Bereich von Unterwasserschall, insbesondere den Empfang von Unterwasserschallwellen mit Sonaranlagen von Wasserfahrzeugen.

Es sind aus dem Stand der Technik Sonaranlagen bekannt, die an Wasserfahrzeugen, wie beispielsweise Unterwasserfahrzeugen, angeordnet sind und mit denen sich unter Wasser ausbreitende Schallwellen empfangen werden. Es wird hierbei zwischen passiven und aktiven Sonaranlagen unterschieden, wobei passive Sonaranlagen ausschließlich zum Empfang von Schallwellen ausgebildet sind. Aktive Sonaranlagen sind zusätzlich zum Empfang von Schallwellen auch eingerichtet, Schallwellen auszusenden. US2007/0008818 A1 beschreibt ein Verfahren zur Bearbeitung von Sonarechos, die von Objekten kommen, die Sonaremissionen ausgesetzt waren, die ein Linienspektrum aufweisen. XP4213518 beschreibt ein Verfahren zur Echtzeit-Sonarstrahlformung durch parallele Datenverarbeitung.

Die Erfindung betrifft zwar den Bereich des Empfangs von sich unter Wasser ausbreitenden Schallwellen, wobei der Begriff "Sonaranlage" im Folgenden sowohl für aktive als auch für passive Sonaranlagen verwendet wird, also auch aktive Sonaranlagen umfasst. Aus der Literatur sind Sonaranlagen bekannt, die eine Vielzahl von Unterwasserschallempfängern, nämlich sogenannte Hydrophone, aufweisen. Hydrophone wandeln Wasserschall in elektrische Signale, die auch Hydrophonsignale genannt werden, um. Die Hydrophone sind mit einer Verarbeitungseinheit elektrisch verbunden, um die mit den Hydrophonen aufgenommenen Hydrophonsignale an die Verarbeitungseinheit zu übertragen. Mittels der Verarbeitungseinheit werden die Hydrophonsignale derart graphisch oder akustisch aufgearbeitet, sodass beispielsweise schallabstrahlende Ziele detektierbar und klassifizierbar sind.

Um nicht nur die Anwesenheit eines schallabstrahlenden Ziels, sondern auch dessen relative Richtung zur Sonaranlage zu bestimmen, ist die Verarbeitungseinheit mit einem Richtungsbildner versehen. Der Richtungsbildner wird in der Literatur oder vom Fachmann auch Beamformer genannt. Mit dem Richtungsbildner lassen sich die Hydrophonsignale so verarbeiten, dass Schallsignale von Schallwellen, die aus einer bestimmten Einfallsrichtung auf die Hydrophone der Sonaranlage einfallen, verstärkt und andere Schallsignale von Schallwellen, die aus anderen Richtungen auf die Hydrophone der Sonaranlage einfallen, gedämpft werden. Für jede zu betrachtende Richtung wird demnach mit dem Richtungsbildner ein separates Richtungssignal erzeugt.

Es sind Richtungsbilder bekannt, bei denen die Hydrophonsignale zueinander zeitverzögert und dann die zeitverzögerten Hydrophonsignale miteinander addiert werden. Durch die Zeitverzögerung werden Laufzeitunterschiede der Schallwellen zu den einzelnen Hydrophonen, die richtungsabhängig sind, ausgeglichen. Für jede unterschiedliche Richtung oder Einfallsrichtung, die betrachtet werden soll, müssen die einzelnen Hydrophonsignale mit unterschiedlichen Verzögerungskoeffizienten verzögert werden. Die entsprechenden Zeitverzögerungskoeffizienten sind demnach für verschiedene Richtungen jeweils als Sätze von Zeitverzögerungskoeffizienten festgelegt.

Alternativ ist auch bekannt, die Hydrophonsignale in den Frequenzbereich zu transformieren und die frequenztransformierten Signale mit Faktoren zu multiplizieren. Diese Multiplikation entspricht einer Zeitverschiebung oder Zeitverzögerung im Zeitbereich. Nach der Multiplikation werden die multiplizierten Signale wieder in den Zeitbereich zurücktransformiert und miteinander addiert, sodass sich die gleichen Richtungssignale ergeben, ähnlich wie bei einer zeitlich verzögerten Aufaddition der Signale im Zeitbereich. Analog werden für die Berechnung im Frequenzbereich Sätze von Faktoren verwendet, wobei jeder Satz zum Erzeugen eines Richtungssignals dient.

Vorteil der Bearbeitung im Frequenzbereich ist die vergleichsweise geringe Anforderung an die Rechenleistung. Eine Zeitverzögerung der Hydrophonsignale im Zeitbereich ist nämlich vergleichsweise rechenintensiv.

Ein Problem bei der Richtungsbildung ist jedoch, dass sich neben der zu betrachtenden Richtung, der sogenannten "Hauptkeule", die bei der Richtungsbildung auch Hauptrichtung genannt wird und aus der auf die Hydrophone der Sonaranlage einfallende Schallsignale von Schallwellen am stärksten verstärkt werden, auch Nebenrichtungen, die sogenannten "Nebenkeulen", ergeben. Schallwellen, die aus den Nebenrichtungen auf die Hydrophone der Sonaranlage einfallen, werden zwar nicht so stark wie die Schallwellen, die aus der Hauptrichtung einfallen, verstärkt, wobei jedoch in den Nebenrichtungen liegende Ziele, die beispielsweise Geräusche oder Schallwellen mit einer vergleichsweise hohen Amplitude ausstrahlen, teilweise nicht sicher von Zielen, die in der Hauptrichtung liegen, unterschieden werden können.

Es ist somit Aufgabe der vorliegenden Erfindung, ein gegenüber den aus dem Stand der Technik bekannten Verfahren zur richtungsselektiven Zielerkennung alternatives Verfahren aufzuzeigen, das insbesondere eine bessere Zieltrennung ermöglicht.

Die Erfindung weist hierzu eine Verarbeitungseinheit für eine Sonaranlage zum Verarbeiten von Hydrophonsignalen auf. Vorzugsweise werden der Verarbeitungseinheit Hydrophonsignale von Hydrophonen einer Sonaranlage zugeführt. Die Hydrophonsignale entsprechen elektrischen Signalen der mit den Hydrophonen empfangenen Schallwellen. Im Folgenden werden die Hydrophonsignale auch kurz Schallsignale genannt. Die Verarbeitungseinheit umfasst zunächst eine FFT-Einheit, nämlich eine schnelle Fourier-Transformations-Einheit, zum Ermitteln von fouriertransformierten Hydrophonsignalen. Die FFT-Einheit ermittelt demnach aus jedem der zugeführten Hydrophonsignale jeweils ein fouriertransformiertes Hydrophonsignal mit einer schnellen Fouriertransformation (FFT), die auch "Fast Fouriertransformation" genannt wird.

Vorzugsweise werden die Hydrophonsignale vor dem Transformieren mit der FFT-Einheit einem Analog-Digital-Wandler zugeführt, der digitale Hydrophonsignale erzeugt. Die FFT-Einheit verwendet beispielsweise eine 256 Punkte, 512 Punkte oder 1.024 Punkte FFT. Das digitalisierte Hydrophonsignal wird also blockweise in Blöcken mit zum Beispiel 256, 512 oder 1.024 Abtastwerten transformiert. Die Hydrophonsignale werden somit jeweils transformiert und danach im Folgenden auch fouriertransformierte Hydrophonsignale genannt.

Zudem umfasst die Verarbeitungseinheit einen Frequenzteiler, um die fouriertransformierten Hydrophonsignale, die mit der FFT-Einheit fouriertransformiert wurden, jeweils in mehrere Frequenzbänder, zum Beispiel der gleichen Frequenzbreite, zu unterteilen. Jedes fouriertransformierte Hydrophonsignal wird also jeweils in mehrere Frequenzbänder, also jeweils in mehrere Teilsignale, unterteilt. Es existieren somit für jedes fouriertransformierte Hydrophonsignal jeweils mehrere Teilsignale jeweils eines unterschiedlichen Frequenzbandes.

Außerdem umfasst die Verarbeitungseinheit eine Multiplikationseinheit. Der Multiplikationseinheit werden die fouriertransformierten Hydrophonsignale jedes Frequenzbandes, also alle Teilsignale, zugeführt und jedes der Frequenzbänder jedes fouriertransformierten Signals wird in der Multiplikationseinheit mit einem spezifischen Faktor multipliziert. Die mit der Multiplikationseinheit so erzeugten Signale werden im Folgenden auch kurz multiplizierte Signale genannt. Für jedes Teilsignal ist hierbei ein spezifischer Faktor vorbestimmt.

Daraufhin werden die multiplizierten Signale einer IFFT-Einheit, die eine inverse Fouriertransformation, nämlich vorzugsweise eine inverse schnelle Fouriertransformation, durchführt, zugeführt, um die multiplizierten Signale wieder in Zeitsignale zurückzutransformieren. Daraufhin werden mehrere oder alle Zeitsignale aufaddiert. Hierdurch ergibt sich dann ein Richtungssignal.

Somit ist die Verarbeitungseinheit also eingerichtet, einen Faktor für jedes Frequenzband jedes fouriertransformierten Hydrophonsignals in Abhängigkeit des jeweiligen Frequenzbereichs und der Position des Hydrophons, mit dem das entsprechende Hydrophonsignal erzeugt wurde, zu wählen und jedes Frequenzband jedes fouriertransformierten Hydrophonsignals mit dem entsprechenden gewählten Faktor zu multiplizieren. Indem die Hydrophonsignale nach der Transformation in den Frequenzbereich in mehrere Frequenzbänder unterteilt werden und jedes der Signale eines Frequenzbandes, also jedes Teilsignal, mit einem individuellen Faktor multipliziert wird, ist ein vergleichsweise präziserer Ausgleich des Laufzeitunterschieds möglich, sodass nach Rücktransformation in die Zeitsignale mit der IFFT-Einheit nach dem Aufsummieren der Zeitsignale Richtungssignale erhältlich sind, die eine noch bessere Zieltrennung ermöglichen.

Insbesondere werden gemäß einer vorteilhaften Ausführungsform nur die Teilsignale der gleichen Frequenzbänder jedes fouriertransformierten Hydrophonsignals, das wieder zurück in den Zeitbereich nach der Multiplikation transformiert wurde, addiert, sodass ein Richtungssignal eines bestimmten Frequenzbandes oder Frequenzbereichs erhalten wird. Hierdurch können dann frequenzselektive Richtungszeitsignale erhalten werden.

Gemäß einer ersten Ausführungsform werden keine festen vordefinierte Faktoren verwendet, sondern es werden Faktoren für die Multiplikationseinheit verwendet, die variabel sind und in Abhängigkeit der Hydrophonsignale selbst, nämlich der Werte der Hydrophonsignale selbst, vorbestimmt werden. Das heißt, die Faktoren sind veränderlich und werden vorzugsweise zeitgleich, zum Beispiel parallel, für die Hydrophonsignale in Abhängigkeit der Hydrophonsignale selbst bestimmt.

Durch Anpassen der Faktoren in Abhängigkeit der Hydrophonsignale selbst wird somit eine exaktere Zeitverschiebung oder Zeitverzögerung der einzelnen Hydrophonsignale ermöglicht, um Laufzeitunterschiede der Schallwellen zu den einzelnen Hydrophonen exakter zu bestimmen und die Faktoren daran anzupassen. Durch Anpassen der Faktoren werden Einflussgrößen, wie Wassertemperatur oder Salzgehalt, die sich ebenfalls auf die Laufzeitunterschiede auswirken, zusätzlich berücksichtigt.

Gemäß einer weiteren Ausführungsform umfasst die Verarbeitungseinheit einen Speicher zum Speichern jedes der Hydrophonsignale für ein vordefiniertes Zeitfenster. Unter Verwendung des Speichers ist die Verarbeitungseinheit eingerichtet, jedes Hydrophonsignal für das vordefinierte Zeitfenster zwischenzuspeichern und eine Korrelation der Hydrophonsignale für das jeweilige Zeitfenster zu ermitteln. In Abhängigkeit der Korrelation werden dann die Faktoren mit der Verarbeitungseinheit bestimmt. Somit sind Laufzeitunterschiede der einzelnen Hydrophonsignale durch Betrachtung der Korrelation der Hydrophonsignale zueinander bestimmbar. So können in Abhängigkeit der Korrelation tatsächliche und nicht nur theoretische Laufzeitunterschiede bestimmt werden, aus denen die Faktoren realitätsnäher und daher exakter bestimmbar sind.

Gemäß einer weiteren Ausführungsform wird die Korrelation mit der Verarbeitungseinheit ermittelt. Dies erfolgt vorzugsweise, indem die Hydrophonsignale der Zeitfenster fouriertransformiert und zum Beispiel Kovarianzmatrizen jeweils für eines von verschiedenen Frequenzbändern der fouriertransformierten Hydrophonsignale des Zeitfensters erzeugt werden. Aus Kovarianzmatrizen ist der Grad der Korrelation der verschiedenen Hydrophonsignale in festgelegter mathematischer Weise bestimmbar, sodass hieraus automatisiert geeignete Faktoren bestimmt werden können.

Gemäß einer weiteren Ausführungsform umfasst die Verarbeitungseinheit einen adaptiven Richtungsbildner, mit dem Steuervektoren bestimmt werden. Diese Steuervektoren werden gemäß der vorgenannten Ausführungsform vorzugsweise in Abhängigkeit der zuvor bestimmten Kovarianzmatrizen bestimmt. Der adaptive Richtungsbildner sowie das Erzeugen von Steuervektoren an sich ist bekannt. Der adaptive Richtungsbildner wird auch adaptiver Beamformer genannt.

Der adaptive Beamformer bestimmt bekanntermaßen lediglich die Energieverteilung aus verschiedenen Einfallsrichtungen basierend auf den Kovarianzmatrizen. Hierbei werden in einem Zwischenschritt die Steuervektoren erhalten. Gemäß dieser Ausführungsform werden die Steuervektoren nun jedoch nicht nur für einen Zwischenverarbeitungsschritt verwendet. Vielmehr werden die Steuervektoren als Faktoren für die Multiplikation der fouriertransformierten Hydrophonsignale verwendet. Jeder Steuervektor beschreibt die zeitliche Verschiebung der Hydrophonsignale einer bestimmten Richtung zueinander für ein bestimmtes Frequenzband.

Durch Einsatz eines adaptiven Beamformers wird eine optimate Berechnung erlaubt, sodass die Steuervektoren robust, insbesondere gegenüber Abweichungen der Peilung der Ziele gegenüber den verwendeten Blickrichtungen, Positionsungenauigkeiten der Hydrophone und Ungenauigkeiten in der Schallgeschwindigkeit, sind.

Gemäß einer weiteren Ausführungsform wird jeder Steuervektor, vorzugsweise mit dem adaptiven Beamformer, jeweils für ein Frequenzband erzeugt und der Multiplikationseinheit zugeführt. Die Elemente eines Steuervektors für das jeweilige Frequenzband entsprechen den Faktoren für die Multiplikation der fouriertransformierten Hydrophonsignale des entsprechenden Frequenzbandes, also der Teilsignale, um ein Richtungssignal dieses Frequenzbandes zu erhalten. Hierdurch lässt sich demnach nach Rücktransformation der multiplizierten Signale desselben Frequenzbandes eindeutig ein Richtungssignal, das nur Frequenzen dieses Frequenzbandes aufweist, ermitteln.

Gemäß einer weiteren Ausführungsform umfasst die Verarbeitungseinheit eine Interpolationseinheit, um die Elemente der Steuervektoren zu interpolieren. Werden demnach Steuervektoren mit einer Anzahl an Elementen, die geringer als die Anzahl der Hydrophonsignale ist, vom adaptiven Beamformer erzeugt, so können durch Interpolation weitere Elemente im Steuervektor erzeugt werden, also die Dimension des Vektors vergrößert werden. Hierdurch kann dann eine entsprechend feinere Richtungsauflösung durch Multiplikation der fouriertransformierten Hydrophonsignale jeweils mit einem individuellen Faktor, der sich aus dem interpolierten Steuervektor ergibt, erzeugt werden.

Gemäß einer weiteren Ausführungsform ist die FFT-Einheit eingerichtet, fouriertransformierte Hydrophonsignale aus sich zeitlich überlappenden Zeitfenstern der Hydrophonsignale zu erzeugen.

Hierdurch werden im Summensonogramm entstehende Artefakte, die durch das Aufaddieren der in den Zeitbereich zurückgewandelten multiplizierten Signale entstehen, reduziert.

Ferner betrifft die Erfindung eine Sonaranlage für ein Wasserfahrzeug zum Empfangen und Auswerten von Wasserschall. Die Sonaranlage umfasst mehrere Hydrophone zum Wandeln von Schallwellen in Hydrophonsignale und eine Verarbeitungseinheit nach einer der vorgenannten Ausführungsformen.

Außerdem betrifft die Erfindung ein Verfahren zum Verarbeiten von Hydrophonsignalen mit einer Verarbeitungseinheit nach einer der vorgenannten Ausführungsformen.

Weitere Ausführungsformen ergeben sich anhand der in den Figuren näher erläuterten Ausführungsbeispiele.
- Fig. 1: zeigt eine bekannte Verarbeitungseinheit,
- Fig. 2: ein erstes Ausführungsbeispiel einer erfindungsgemäßen Verarbeitungseinheit,
- Fig. 3: ein weiteres Ausführungsbeispiel einer erfindungsgemäßen Verarbeitungseinheit und
- Fig. 4: ein Ausführungsbeispiel des erfindungsgemäßen Verfahrens.

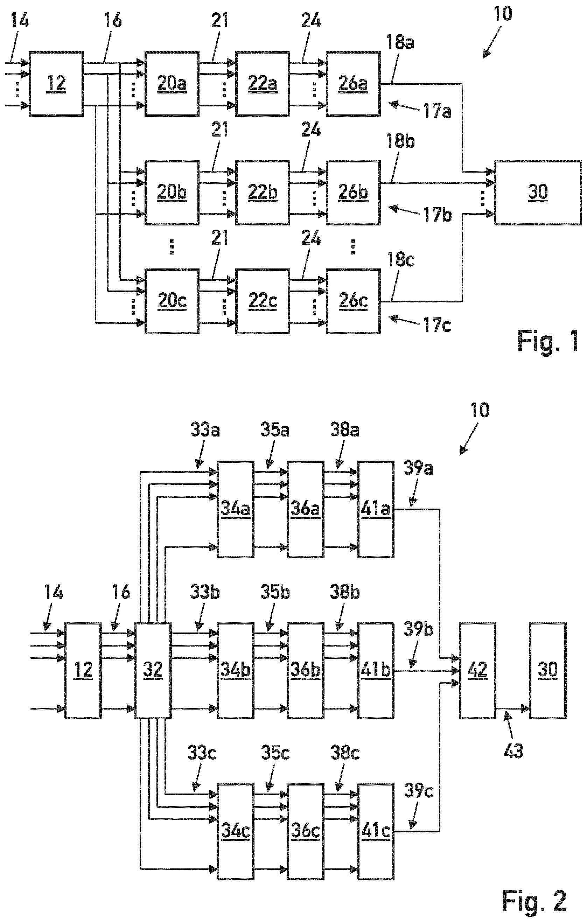

Fig. 1 zeigt eine Verarbeitungseinheit 10, wie sie bekannt ist. Die Verarbeitungseinheit 10 umfasst eine FFT-Einheit 12, der mehrere Hydrophonsignale 14 zugeführt werden. Die FFT-Einheit 12 wandelt die Hydrophonsignale 14 in fouriertransformierte Hydrophonsignale 16 um. Die fouriertransformierten Hydrophonsignale 16 werden dann in Richtungssignale 18 umgewandelt, wobei in Fig. 1 exemplarisch drei Zweige 17a bis 17c dargestellt sind, um drei Richtungssignale 18a bis 18c zu erzeugen.

Zur Erzeugung der Richtungssignale 18a bis 18c werden die fouriertransformierten Signale 16 jeweils in jedem der drei dargestellten Zweige 17a bis 17c mit unterschiedlichen Faktoren in einer Multiplikationseinheit 20a bis 20c multipliziert. Die Faktoren sind für das jeweilige Richtungssignal 18a bis 18c vorbestimmt und in der jeweiligen Multiplikationseinheit 20a bis 20c hinterlegt. Nach dem Multiplizieren werden die multiplizierten fouriertransformierten Hydrophonsignale 21 in IFFT-Einheiten 22a bis 22c wieder in Zeitsignale 24 gewandelt und die Zeitsignale 24 eines jeweiligen Zweiges 17a bis 17c in Summierern 26a bis 26c aufsummiert. Durch Aufsummieren der Zeitsignale 24 eines Zweigs 17a bis 17c ergibt sich dann jeweils eines der Richtungssignale 18a bis 18c. Die Richtungssignale 18a bis 18c können dann graphisch oder akustisch mit einer Darstellungseinheit 30 dargestellt werden.

Fig. 2 zeigt ein erstes Ausführungsbeispiel der erfindungsgemäßen Verarbeitungseinheit 10. Fig. 2 stellt die Erzeugung nur eines einzigen Richtungssignals 18, 43 aus Hydrophonsignalen 14 dar, um die Vorrichtung übersichtlicher darstellen zu können. Demnach wäre die in Fig. 2 dargestellte Vorrichtung dreimal aufzuzeigen, um, gleichermaßen wie in Fig. 1 dargestellt, drei Richtungssignale zu erzeugen. Auch wenn in den Figuren die Verarbeitungseinheit einheitlich mit der Bezugsziffer 10 versehen ist, so ist jedoch zu unterscheiden, dass nur die Verarbeitungseinheit aus Fig. 1 bereits bekannt ist.

Wie bei der bekannten Verarbeitungseinheit 10 werden auch bei der erfindungsgemäßen Verarbeitungseinheit 10 die Hydrophonsignale 14 zunächst einer FFT-Einheit 12 zugeführt. Die FFT-Einheit 12 erzeugt aus den Hydrophonsignalen 14 fouriertransformierte Signale 16. Die fouriertransformierten Signale 16 werden nun jedoch einem Frequenzbandteiler 32 zugeführt. Der Frequenzbandteiler 32 teilt die fouriertransformierten Signale 16 jeweils in mehrere Frequenzbänder auf. Die fouriertransformierten Signale eines ersten Frequenzbandes 33a, also Teilsignale jeweils eines Frequenzbandes des fouriertransformierten Hydrophonsignals, werden dann einer ersten Multiplikationseinheit 34a, die fouriertransformierten Signale eines zweiten Frequenzbandes 33b einer zweiten Multiplikationseinheit 34b und die fouriertransformierten Signale eines dritten Frequenzbandes 33c einer dritten Multiplikationseinheit 34c zugeführt.

In der ersten Multiplikationseinheit 34a werden dann alle fouriertransformierten Hydrophonsignale des ersten Frequenzbandes 33a jeweils mit einem spezifischen, also gegebenenfalls unterschiedlichen, Faktor multipliziert. Analog werden in der zweiten Multiplikationseinheit 34b alle fouriertransformierten Hydrophonsignale des zweiten Frequenzbandes 33b mit vordefinierten Faktoren multipliziert und in der dritten Multiplikationseinheit 34c die fouriertransformierten Hydrophonsignale des dritten Frequenzbandes 33c ebenfalls jeweils mit einem spezifischen Faktor multipliziert.

Die multiplizierten Signale 35 werden dann aus den jeweiligen Multiplikationseinheiten 34a bis 34c jeweils einer IFFT-Einheit 36a bis 36c zugeführt. In den IFFT-Einheiten 36a bis 36c werden die multiplizierten Signale 35 wieder in den Zeitbereich zurücktransformiert. Somit enthalten die Zeitsignale 38 in den unterschiedlichen dargestellten drei Pfaden oder Zweigen 37a bis 37c jeweils nur noch die Frequenzen des dem Zweig entsprechenden Frequenzbandes. Durch Zuführen dieser Zeitsignale 38 zu den Additionseinheiten 41a bis 41c entstehen dann drei Richtungssignale 39a bis 39c, die der gleichen Richtung entsprechen, aber nur Signalanteile der entsprechenden Frequenzbänder aufweisen. Diese Richtungssignale 39a bis 39c jeweils eines Frequenzbandes können nun jeweils einer Darstellungseinheit 30 direkt zugeführt werden, um entsprechend frequenzselektiv das Richtungssignal darzustellen. Alternativ, wie es auch hier dargestellt ist, werden auch diese Richtungssignale 39a bis 39c jeweils eines Frequenzbandes einem weiteren Summierer 42 zugeführt. Der Summierer 42 erzeugt ein Richtungssignal 43 über den gesamten Frequenzbereich, das der Darstellungseinheit 30 für die Ausgabe zugeführt wird.

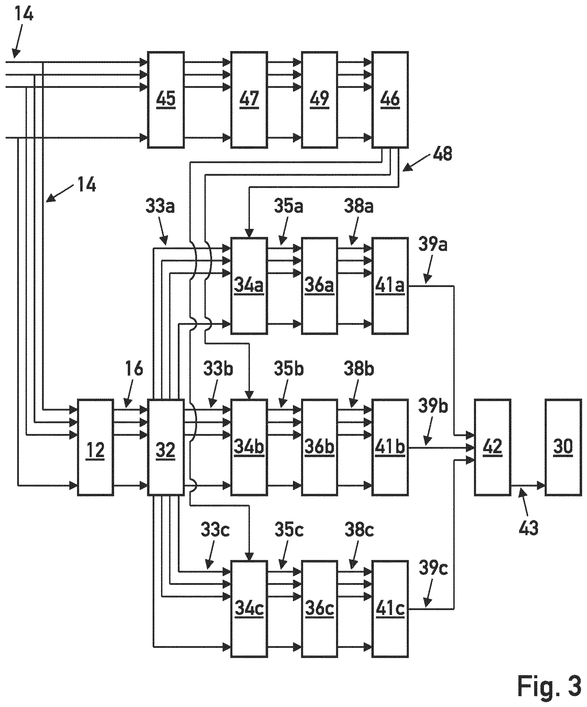

Zu Fig. 2 wurde erklärt, dass die fouriertransformierten Signale 16 nach dem Aufteilen in Frequenzbänder 33a bis 33c, also nach dem Erzeugen der Teilsignale, in den Multiplikationseinheiten 34a bis 34c mit Faktoren multipliziert werden. Im Ausführungsbeispiel der Fig. 2 waren diese vorbestimmt und in den jeweiligen Multiplikationseinheiten 34a bis 34c hinterlegt. Gemäß dem in Fig. 3 dargestellten Ausführungsbeispiel werden diese Faktoren nun in einem weiteren Zweig 44 erzeugt. Hierzu werden in dem weiteren Zweig 44 die Hydrophonsignale 14 zunächst in einem Speicher 45 zwischengespeichert und daraufhin mit einer weiteren FFT-Einheit 47 fouriertransformiert.

Es werden dann für verschiedene Frequenzbereiche oder Frequenzbänder Kovarianzmatrizen der fouriertransformierten Signale 16 des gespeicherten Zeitfensters in einer Korrelationseinheit 49 gebildet und einem adaptiven Richtungsbildner 46, der auch adaptiver Beamformer genannt wird, zugeführt. Der adaptive Richtungsbildner 46 löst ein Gleichungssystem, um den Grad der Korrelation der einzelnen Hydrophonsignale für die verschiedenen Frequenzen zu bestimmen, und erzeugt hieraus Steuervektoren 48a bis 48c. Die Steuervektoren 48a bis 48c werden nun den Multiplikationseinheiten 34a bis 34c zugeführt. Jeder der Steuervektoren 48a bis 48c weist eine Anzahl von Elementen auf, die den Faktoren für die Multiplikationen in den jeweiligen Multiplikationseinheiten 34a bis 34c entsprechen.

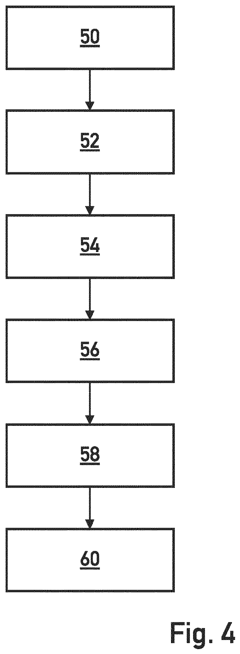

Fig. 4 zeigt den Ablauf eines Ausführungsbeispiels des Verfahrens. In einem Schritt 50 werden Hydrophonsignale 14 aufgenommen und im Schritt 52 fouriertransformiert. Im Schritt 54 werden die fouriertransformierten Signale 16 in Frequenzbänder eingeteilt und die in Frequenzbänder geteilten fouriertransformierten Hydrophonsignale 33a bis 33c im Schritt 56 jeweils mit einem Faktor multipliziert. Die multiplizierten Signale 35 werden dann wieder in den Zeitbereich 58 zurücktransformiert. Zumindest die Zeitsignale 24 des gleichen Frequenzbandes 33a bis 33c werden im Schritt 60 addiert.

### Bezuqszeichenliste

- 10: Verarbeitungseinheit
- 12: FFT-Einheit
- 14: Hydrophonsignale
- 16: fouriertransformierte Hydrophonsignale
- 17: Zweige
- 18: Richtungssignale
- 20: Multiplikationseinheit
- 21: multiplizierte fouriertransformierte Hydrophonsignale
- 22: IFFT-Einheit
- 24: Zeitsignale
- 26: Additionseinheit
- 30: Darstellungseinheit
- 32: Frequenzbandteiler
- 33: Teilsignale (fouriertransformierte Hydrophonsignale eines Frequenzbandes)
- 34: Multiplikationseinheit
- 35: multiplizierte Signale
- 36: IFFT-Einheit
- 37: Zweige/Pfade
- 38: Zeitsignale
- 39: Richtungssignale eines Frequenzbandes
- 41: Additionseinheit
- 42: weitere Additionseinheit
- 43: Richtungssignal
- 44: weiterer Zweig
- 45: Speicher
- 46: adaptiver Richtungsbildner
- 47: weitere FFT-Einheit
- 48: Steuervektoren
- 49: Korrelationseinheit
- 50: Schritte des Verfahrens bis 56
- 58: Zeitbereich
- 60: Schritt des Verfahrens

## Patentansprüche

1. Verarbeitungseinheit für eine Sonaranlage zum Verarbeiten von Hydrophonsignalen (14), umfassend:
- eine FFT-Einheit (12) zum Ermitteln eines fouriertransformierten Hydrophonsignals (16) jeweils aus jedem der empfangenen Hydrophonsignale (14),
- einen Frequenzbandteiler (32), der die fouriertransformierten Hydrophonsignale (16) jeweils in mehrere Frequenzbänder unterteilt,
- mindestens eine Multiplikationseinheit (34a-34c) zum Ermitteln multiplizierter Signale (35) durch Multiplikation jedes fouriertransformierten Hydrophonsignals jedes Frequenzbandes (33a-33c) mit einem Faktor,
- mindestens eine IFFT-Einheit (36a-36c) zum Wandeln jedes der multiplizierten Signale (35) in ein Zeitsignal und
- mindestens eine Additionseinheit (41a-41c, 42) zum Addieren mehrerer oder aller der Zeitsignale (38).

2. Verarbeitungseinheit nach Anspruch 1, wobei die Verarbeitungseinheit (10) eingerichtet ist, die Faktoren in Abhängigkeit der Hydrophonsignale (14), insbesondere deren Werte oder daraus abgeleiteter Werte, vorzubestimmen.

3. Verarbeitungseinheit nach Anspruch 2, wobei die Verarbeitungseinheit (10) einen Speicher (45) zum Speichern jedes der Hydrophonsignale (14) für ein vordefiniertes Zeitfenster umfasst und eingerichtet ist, eine Korrelation der Hydrophonsignale (14) für das jeweilige Zeitfenster zu ermitteln und die Faktoren in Abhängigkeit der Korrelation zu bestimmen.

4. Verarbeitungseinheit nach Anspruch 3, wobei die Verarbeitungseinheit (10) eingerichtet ist, die Korrelation durch Fouriertransformation der Hydrophonsignale (14) der Zeitfenster mit einer weiteren FFT-Einheit (47) und durch Erzeugen von Kovarianzmatrizen für verschiedene Frequenzbänder zu erzeugen.

5. Verarbeitungseinheit nach einem der Ansprüche 1 bis 4, wobei die Verarbeitungseinheit (10) einen adaptiven Richtungsbildner (46) zum Bestimmen von Steuervektoren (48a-48c), insbesondere in Abhängigkeit der bestimmten Kovarianzmatrizen, aufweist, wobei die Steuervektoren (48a-48c) die Faktoren für die Multiplikationseinheit (34a-34c) umfassen.

6. Verarbeitungseinheit nach Anspruch 5, wobei jeder Steuervektor (48a-48c) jeweils für ein Frequenzband erzeugt wird und die Elemente eines Steuervektors (48a-48c) jeweils einem der Faktoren für die Multiplikation der fouriertransformierten Hydrophonsignale des entsprechenden Frequenzbandes (33a-33c) entsprechend.

7. Verarbeitungseinheit nach einem der Ansprüche 5 oder 6, wobei die Verarbeitungseinheit (10) eine Interpolationseinheit aufweist, um die Elemente der Steuervektoren (48a-48c) zu interpolieren.

8. Verarbeitungseinheit nach einem der Ansprüche 1 bis 7, wobei die FFT-Einheit (12) eingerichtet ist, fouriertransformierte Hydrophonsignale (16) aus sich zeitlich überlappenden Zeitfenstern der Hydrophonsignale (16) zu erzeugen.

9. Sonaranlage für ein Unterwasserfahrzeug zum Empfangen und Auswerten von Wasserschall, wobei die Sonaranlage mehrere Hydrophone zum Wandeln von Schallwellen in Hydrophonsignale (14) und eine Verarbeitungseinheit (10) nach einem der Ansprüche 1 bis 8 umfasst.

10. Verfahren zum Verarbeiten von Hydrophonsignalen (14) mit einer Verarbeitungseinheit (10), insbesondere nach einem der Ansprüche 1 bis 8, umfassend die Schritte:
- Ermitteln (52) eines fouriertransformierten Hydrophonsignales (16) jeweils aus jedem der empfangenen Hydrophonsignale (14) mit einer FFT-Einheit (12),
- Unterteilen (54) der Hydrophonsignale (16) jeweils in mehrere Frequenzbänder mit einem Frequenzbandteiler (32),
- Ermitteln multiplizierter Signale (35) durch Multiplikation (56) jedes fouriertransformierten Hydrophonsignals jedes Frequenzbandes (33a-33c) mit einem Faktor mit mindestens einer Multiplikationseinheit (34a-34c),
- Wandeln jedes der multiplizierten Signale (35) jeweils in ein Zeitsignal (38) mit mindestens einer IFFT-Einheit (36a-36c) und
- Addieren (60) mehrerer oder aller der Zeitsignale in einer Additionseinheit (41a-41c, 42).

11. Verfahren nach Anspruch 10, wobei die Faktoren in Abhängigkeit der Hydrophonsignale (14) vorbestimmt werden.

12. Verfahren nach Anspruch 10 oder 11, wobei jedes Hydrophonsignal (14) für ein vordefiniertes Zeitfenster gespeichert, eine Korrelation der Hydrophonsignale (14) für das jeweilige Fenster ermittelt und die Faktoren in Abhängigkeit der Korrelation bestimmt werden.

13. Verfahren nach Anspruch 12, wobei die Korrelation durch Fouriertransformation der Hydrophonsignale (14) der Zeitfenster mit einer weiteren FFT-Einheit (40) und durch Erzeugen von Kovarianzmatrizen für verschiedene Frequenzbänder der fouriertransformierten Hydrophonsignale (16) erzeugt werden.

14. Verfahren nach einem der Ansprüche 10 bis 13, wobei Steuervektoren (48a-48c) mit einem adaptiven Richtungsbildner (46) in Abhängigkeit der Kovarianzmatrizen bestimmt und aus den Steuervektoren (48a-48c) die Faktoren für die Multiplikationseinheit (34a-34c) bestimmt werden.

15. Verfahren nach Anspruch 14, wobei die Elemente der Steuervektoren (48a-48c) mit einer Interpolationseinheit interpoliert werden.

## Claims

1. Processing unit for a sonar system for processing hydrophone signals (14), comprising:
- an FFT unit (12) for ascertaining a Fourier-transformed hydrophone signal (16) in each case from each of the received hydrophone signals (14),
- a frequency band divider (32), which subdivides the Fourier-transformed hydrophone signals (16) in each case into a plurality of frequency bands,
- at least one multiplication unit (34a-34c) for ascertaining multiplied signals (35) by multiplying each Fourier-transformed hydrophone signal of each frequency band (33a-33c) by a factor,
- at least one IFFT unit (36a-36c) for converting each of the multiplied signals (35) into a time signal, and
- at least one addition unit (41a-41c, 42) for adding a plurality or all of the time signals (38).

2. Processing unit according to Claim 1, wherein the processing unit (10) is configured to predetermine the factors depending on the hydrophone signals (14), in particular the values thereof or values derived therefrom.

3. Processing unit according to Claim 2, wherein the processing unit (10) comprises a memory (45) for storing each of the hydrophone signals (14) for a predefined time window and is configured to ascertain a correlation of the hydrophone signals (14) for the respective time window and to determine the factors depending on the correlation.

4. Processing unit according to Claim 3, wherein the processing unit (10) is configured to generate the correlation by Fourier transformation of the hydrophone signals (14) of the time windows by means of a further FFT unit (47) and by generating covariance matrices for different frequency bands.

5. Processing unit according to any of Claims 1 to 4, wherein the processing unit (10) comprises an adaptive beamformer (46) for determining control vectors (48a-48c), in particular depending on the covariance matrices determined, wherein the control vectors (48a-48c) comprise the factors for the multiplication unit (34a-34c).

6. Processing unit according to Claim 5, wherein each control vector (48a-48c) is generated in each case for a frequency band and the elements of a control vector (48a-48c) correspond in each case to one of the factors for the multiplication of the Fourier-transformed hydrophone signals of the corresponding frequency band (33a-33c).

7. Processing unit according to either of Claims 5 and 6, wherein the processing unit (10) comprises an interpolation unit in order to interpolate the elements of the control vectors (48a-48c).

8. Processing unit according to any of Claims 1 to 7, wherein the FFT unit (12) is configured to generate Fourier-transformed hydrophone signals (16) from temporally overlapping time windows of the hydrophone signals (16).

9. Sonar system for an underwater vehicle for receiving and evaluating waterborne sound, wherein the sonar system comprises a plurality of hydrophones for converting sound waves into hydrophone signals (14) and a processing unit (10) according to any of Claims 1 to 8.

10. Method for processing hydrophone signals (14) by means of a processing unit (10), in particular according to any of Claims 1 to 8, comprising the following steps:
- ascertaining (52) a Fourier-transformed hydrophone signal (16) in each case from each of the received hydrophone signals (14) by means of an FFT unit (12),
- subdividing (54) the hydrophone signals (16) in each case into a plurality of frequency bands by means of a frequency band divider (32),
- ascertaining multiplied signals (35) by multiplying (56) each Fourier-transformed hydrophone signal of each frequency band (33a-33c) by a factor by means of at least one multiplication unit (34a-34c),
- converting each of the multiplied signals (35) in each case into a time signal (38) by means of at least one IFFT unit (36a-36c), and
- adding (60) a plurality or all of the time signals in an addition unit (41a-41c, 42).

11. Method according to Claim 10, wherein the factors are predetermined depending on the hydrophone signals (14) .

12. Method according to Claim 10 or 11, wherein each hydrophone signal (14) is stored for a predefined time window, a correlation of the hydrophone signals (14) is ascertained for the respective window, and the factors are determined depending on the correlation.

13. Method according to Claim 12, wherein the correlation is generated by Fourier transformation of the hydrophone signals (14) of the time windows by means of a further FFT unit (40) and by generating covariance matrices for different frequency bands of the Fourier-transformed hydrophone signals (16).

14. Method according to any of Claims 10 to 13, wherein control vectors (48a-48c) are determined by means of an adaptive beamformer (46) depending on the covariance matrices and the factors for the multiplication unit (34a-34c) are determined from the control vectors (48a-48c).

15. Method according to Claim 14, wherein the elements of the control vectors (48a-48c) are interpolated by means of an interpolation unit.

## Revendications

1. Unité de traitement pour une installation sonar destinée à traiter des signaux d'hydrophone (14), comprenant :
- une unité de FFT (12) destinée à déterminer un signal d'hydrophone après transformée de Fourier (16) respectivement à partir de chacun des signaux d'hydrophone (14) reçus,
- un diviseur de bande de fréquence (32), qui subdivise respectivement les signaux d'hydrophone après transformée de Fourier (16) en plusieurs bandes de fréquences,
- au moins une unité de multiplication (34a-34c) destinée à identifier des signaux multipliés (35) par multiplication par un facteur de chaque signal d'hydrophone après transformée de Fourier de chaque bande de fréquences (33a-33c),
- au moins une unité d'IFFT (36a-36c) destinée à convertir chacun des signaux multipliés (35) en un signal de temps et
- au moins une unité d'addition (41a-41c, 42) destinée à additionner plusieurs ou tous les signaux de temps (38).

2. Unité de traitement selon la revendication 1, l'unité de traitement (10) étant conçue pour prédéterminer les facteurs en fonction des signaux d'hydrophone (14), notamment de leurs valeurs ou de valeurs qui en sont dérivées.

3. Unité de traitement selon la revendication 2, l'unité de traitement (10) comportant une mémoire (45) destinée à mémoriser chacun des signaux d'hydrophone (14) pendant une fenêtre temporelle prédéfinie et étant conçue pour identifier une corrélation des signaux d'hydrophone (14) pour la fenêtre temporelle respective et déterminer les facteurs en fonction de la corrélation.

4. Unité de traitement selon la revendication 3, l'unité de traitement (10) étant conçue pour générer la corrélation par transformée de Fourier des signaux d'hydrophone (14) de la fenêtre temporelle avec une autre unité de FFT (47) et en générant des matrices de covariance pour différentes bandes de fréquences.

5. Unité de traitement selon l'une des revendications 1 à 4, l'unité de traitement (10) possédant un formateur de direction (46) adaptatif destiné à déterminer des vecteurs de commande (48a-48c), notamment en fonction des matrices de covariance déterminées, les vecteurs de commande (48a-48c) comprenant les facteurs pour l'unité de multiplication (34a-34c).

6. Unité de traitement selon la revendication 5, chaque vecteur de commande (48a-48c) étant généré respectivement pour une bande de fréquences et les éléments d'un vecteur de commande (48a-48c) correspondant respectivement à l'un des facteurs pour la multiplication des signaux d'hydrophone après transformée de Fourier de la bande de fréquences (33a-33c) correspondante.

7. Unité de traitement selon l'une des revendications 5 et 6, l'unité de traitement (10) possédant une unité d'interpolation afin d'interpoler les éléments des vecteurs de commande (48a-48c).

8. Unité de traitement selon l'une des revendications 1 à 7, l'unité de FFT (12) étant conçue pour générer des signaux d'hydrophone après transformée de Fourier (16) à partir de fenêtres temporelles qui se chevauchent dans le temps des signaux d'hydrophone (16).

9. Installation sonar pour un sous-marin destinée à recevoir et à interpréter un son aquatique, l'installation sonar comportant plusieurs hydrophones destinés à convertir des ondes sonores en signaux d'hydrophone (14) et une unité de traitement (10) selon l'une des revendications 1 à 8.

10. Procédé de traitement de signaux d'hydrophone (14) avec une unité de traitement (10), notamment selon l'une des revendications 1 à 8, comprenant les étapes suivantes :
- détermination (52) d'un signal d'hydrophone après transformée de Fourier (16) respectivement à partir de chacun des signaux d'hydrophone (14) reçus avec une unité de FFT (12),
- subdivision (54) des signaux d'hydrophone (16) respectivement en plusieurs bandes de fréquences avec un diviseur de bande de fréquence (32),
- identification des signaux multipliés (35) par multiplication (56) par un facteur de chaque signal d'hydrophone après transformée de Fourier de chaque bande de fréquences (33a-33c) avec au moins une unité de multiplication (34a-34c),
- conversion de chacun des signaux multipliés (35) respectivement en un signal de temps (38) avec au moins une unité d'IFFT (36a-36c) et
- addition (60) de plusieurs ou de tous les signaux de temps dans une unité d'addition (41a-41c, 42).

11. Procédé selon la revendication 10, les facteurs étant prédéterminés en fonction des signaux d'hydrophone (14) .

12. Procédé selon la revendication 10 ou 11, chaque signal d'hydrophone (14) étant mémorisé pendant une fenêtre temporelle prédéfinie, une corrélation des signaux d'hydrophone (14) pour la fenêtre respective étant identifiée et les facteurs étant déterminés en fonction de la corrélation.

13. Procédé selon la revendication 12, la corrélation étant générée par transformée de Fourier des signaux d'hydrophone (14) de la fenêtre temporelle avec une autre unité de FFT (40) et en générant des matrices de covariance pour différentes bandes de fréquences des signaux d'hydrophone après transformée de Fourier (16).

14. Procédé selon l'une des revendications 10 à 13, des vecteurs de commande (48a-48c) étant déterminés en fonction des matrices de covariance avec un formateur de direction (46) adaptatif, les facteurs pour l'unité de multiplication (34a-34c) étant déterminés à partir des vecteurs de commande (48a-48c).

15. Procédé selon la revendication 14, les éléments des vecteurs de commande (48a-48c) étant interpolés avec une unité d'interpolation.
